# EUROPEAN PATENT APPLICATION

(11) **EP 1 507 221 A1**
(43) Date of publication of application: **16.02.2005**
(21) Application number: 03728121.9
(22) Date of filing: 20.05.2003
(51) Int. Cl.: G06F 17/50, G06F 17/60

(54) **COOPERATIVE WORK TYPE APPLICATION SERVICE SYSTEM**

(30) Priority: 23.05.2002 JP 2002149471
(71) Applicant: Riken, Wako-shi, Saitama 351-0198 (JP)
(72) Inventor: Makinouchi, Akitake c/o Riken, Wako-shi, Saitama 351-0198 (JP)
(74) Representative: Gille Hrabal Struck Neidlein Prop Roos
(86) International application number: PCT/JP2003/006277
(87) International publication number: WO 2003/100669

(57) **Abstract**

A collaborative work environment is provided that is composed of collaborative work environment means that, in a process of "Digital manufacturing" making use of simulation, selects an appropriate support staff member based on the content of an enquiry, selects a target simulation tool through cooperation between a user and the support staff member, has the selected simulation tool executed, reexecutes the tool if necessary as the simulation result is being discussed and generates data for the following process, as well as a wide variety of application servers connected to the Internet. An evolution towards the effective use of experts and skillful and experienced persons serving as support staff, an improvement in work efficiency of users and the like, and a novel service architecture of the Internet use form is projected.

## Description

### TECHNICAL FIELD

The present invention is concerned with a processing form for promoting work with the aim that users, in a pattern of use offering application service on the basis of a network system represented by the Internet, cooperate with experts and experienced and skillful persons in each field, and pertains in particular to simulation means, represented by Computer Aided Design (CAD), and a system implementing a system architecture suitable for computer experiments, virtual prototyping, and, in addition, actual prototyping work processes integrating virtual prototyping results, based on the simulation results of the simulation means.

### BACKGROUND ART

In recent years, accompanying the explosive growth of the Internet, its patterns of use have also advanced from the use of electronic mail, in the initial stage of the Internet, to information searches of every kind, such as publication searches, and information provision functionality, such as corporate advertising offers, all of which have recourse to the World Wide Web (WWW).

Also, there is an evolution in progress towards a novel Internet architecture, towards a form of operating a wide variety of applications on the basis of servers connected to the Internet system, and of providing these applications over the Internet.

This form of service provision is also called the Application Service Provider (ASP) form, there being electronic mail system and accounting calculation processing ASPs. Regarding Internet mail and the course of development of the Internet including WWW, articles are included in the reference documents below.
(1) F.E. Hart et al.: The Interface Message Processor for the ARPA Network, Proc. SJCC, Vol. 36, pp. 551-567 (1970).
(2) T.S. Perry: E-MAIL, Pervasive and Persuasive, IEEE Spectrum, Oct. 1992, pp. 20-30 (1992).
(3) Haruhisa Ishida: The Internet has come this far - The Present State and Topics, Jouhou Shori, Vol. 39, No. 5, pp. 393-399 (1998).

Incidentally, on the advanced research & development and technological development scene, huge trial and error work has become indispensable, and risks during development have increased. In particular, on the "Digital manufacturing" research & development and technological development scene, Computer Aided Design (CAD), Computer Aided Manufacturing (CAM), Computer Aided Engineering (CAE), Computer Aided Testing (CAT), and the like, are being utilized as simulation means for design, shaping, analysis, and testing.

Since the group of these simulation tools is costly, there are funding barriers preventing each company from acquiring these individually, and it is expected that the utilization of ASPs over the Internet will offer a solution to that problem.

### DISCLOSURE OF THE INVENTION

Incidentally, as conventional simulation means, the object is stored as data with Constructive Solid Geometry (CSG) or Boundary Representation (B-rep).

However, with CSG, because the whole of the object is stored as an aggregate of infinitesimal solid models, the data are heavy, and in the case of implementation as simulation means, there was the problem that a very long time was required for the analysis.

Also, since, with B-rep, the object is implemented with its boundaries, the data are light and the data volume is lowered, but since the interior of the boundary face is handled uniformly, there was the problem that it was not suitable for deformation analysis.

With the group of the wide variety of simulation tools mentioned above, since the data representations of the representation information of the object differ individually, it is necessary, in order to put CAD, CAM, CAE, and CAT to practical use in the ASP service form, for the user to perform a data format conversion between each simulation tool, so there remained the problem that the merits of using ASP did not materialize.

Concerning the topic of the reduction of the data volume of the object, the same applicant has previously made filings, through the Japanese patent applications No. 2001-25023 and No. 2001-210508. According to these inventions, because it is possible to divide the geometric data of the object into the cell of the cube intersected at right angles by the boundary plane obtained by octree partitioning and to store them into boundary cells and interior cells, one can administer, with identical structures, data related to a series of processes, from design to shaping, assembly, testing, and evaluation, so it has been possible to advance one step towards the unification of simulation tools such as CAD, CAM, CAE, and CAT. These data are named V-CAD data.

On the one hand, in "Digital manufacturing", there are many different kinds of CAD, CAM, CAE, and CAT simulation tools, and the actual state of affairs is that simulations are executed while receiving the support of experts and skillful and experienced persons. Based on this situation, the following issues arise when unifying the group of these simulation tools in the ASP form:
(1) It is difficult for the user to judge which simulation tool to use when there are too many alternatives from which to choose.
(2) It becomes a problem from the point of view of operating expenses to have a multitude of simulation tools integrated on the ASP side, each simulation tool being costly.

On the other hand, for users (customers), it is desirable that a user environment become complete for performing "Digital manufacturing" by using an ASP while receiving support from designers, experts, and skillful and experienced persons, so there are expectations for an evolution towards a novel application service architecture of the Internet use form.

Consequently, it is an object of the present invention to provide a collaborative work type application service system, in "Digital manufacturing" processes making use of simulation tools, that allows for simulation work in which users cooperate with designers, experts, and skillful and experienced persons.

It is a further object of the present invention to provide a service system architecture making it possible, in collaborative work type application service systems, to use the desired simulation tools only when needed.

In addition, it is an object of the present invention to provide a service system architecture in which designers, experts, and skillful and experienced persons able to handle the resolution of the user's problems can be perceived by the user to be close to him.

### BRIEF DESCRIPTION OF THE DRAWINGS

Fig. 1 is a diagram directly showing the concept of a collaborative work type application service system of the present invention.
Fig. 2 is a diagram showing the configuration of cooperative type ASP work environment means 100, representative in terms of hardware and software, for a concrete embodiment related to a collaborative work type application service system.
Fig. 3 is a diagram showing the format of a support staff management table 7 (Support Management Table: SMT).
Fig. 4 is a diagram showing the format of a required processing function management table 8 (Application Management Table: AMT).
Fig. 5 is a diagram showing the processing flow of helpdesk center processing means 10.
Fig. 6 is a processing flow of a required function selection execution processing portion 11 within collaborative work environment means 102.

### BEST MODE OF CARRYING OUT THE INVENTION

In order to attain the objects of the invention, the collaborative work type application service system of the present invention is composed of helpdesk center means selecting an appropriate support staff member based on the contents of an enquiry coming from the user and creating a dialog environment for the user and the support staff member, collaborative work environment means selecting a simulation tool for the objective towards which the user and the selected appropriate support staff member are cooperating, executing the selected simulation tool, re-executing the simulation tool if necessary and generating data for the following process, as well as a wide variety of application servers connected to the Internet.

In the helpdesk center means, there is WWW server functionality so that the user is able to use the World Wide Web, a selection of a support staff member appropriate to the request from the user if the user inputs desired functions from the WWW interface screen, and the function of contacting the appropriate support staff member. Contact with the support staff member is handled by driving electronic mail transmission, telephone calls or mobile telephone calls. The contacted supported staff member accesses the dialog environment means provided by the helpdesk center means. As a result of this, the dialog between the user and the support staff member gets established. The dialog environment means is based on exchanges using the World Wide Web, but electronic mail in combination with telephony or video telephony may also be used.

In the collaborative work environment means, processing functions are provided for selecting the target simulation tool, through cooperation between the user and the selected appropriate support staff member, and with a reflection of the opinions coming from the knowledge and experience of the support staff member, transferring simulation tool data to an application server connected to the Internet in order to have the selected simulation tool executed, visualizing the simulation result and, and as it is being discussed, [re]executing the tool, if necessary, for a second time, as well as the subsequent process, e.g. the generation of data for a numerically controlled (NC) shaping device.

According to the cooperative type application service system of the present invention, since the user, in cooperation with designers, experts, and skillful and experienced persons, operates consistently, from the preparation of the simulation work to the execution of the simulation and the generation of NC data, it is projected to evolve towards an effective use of experts and skillful and experienced persons serving as support staff, an improvement in work efficiency of users and the like, and a novel service architecture of the Internet use form. Also, since the cooperative type application service system of the present invention selects a server of the type of Internet-connected application servers in which many different kinds of simulation tools are installed, and executes the desired simulation, the result is that it is possible to jointly use many different kinds of simulation tools, so a reduction in expenses is projected.

Below, a detailed explanation using the drawings is given concerning an embodiment of the present invention. Further, an embodiment applied to a series of "Digital manufacturing" processes is shown here, but the cooperative type application service system of the present invention can be applied even in case of the execution of various [other] kinds of applications requiring support staff, and it is not necessarily limited to an application to "Digital manufacturing" processes.

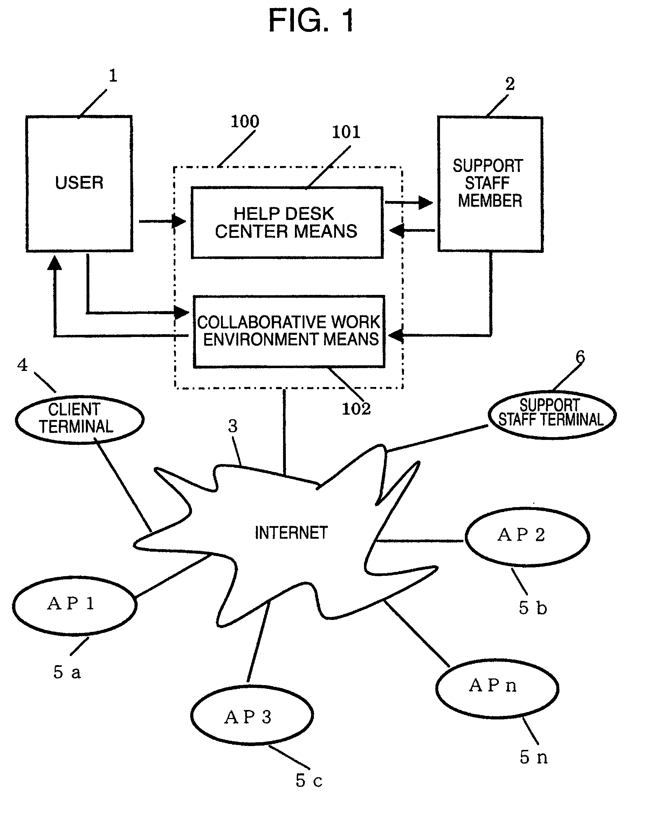

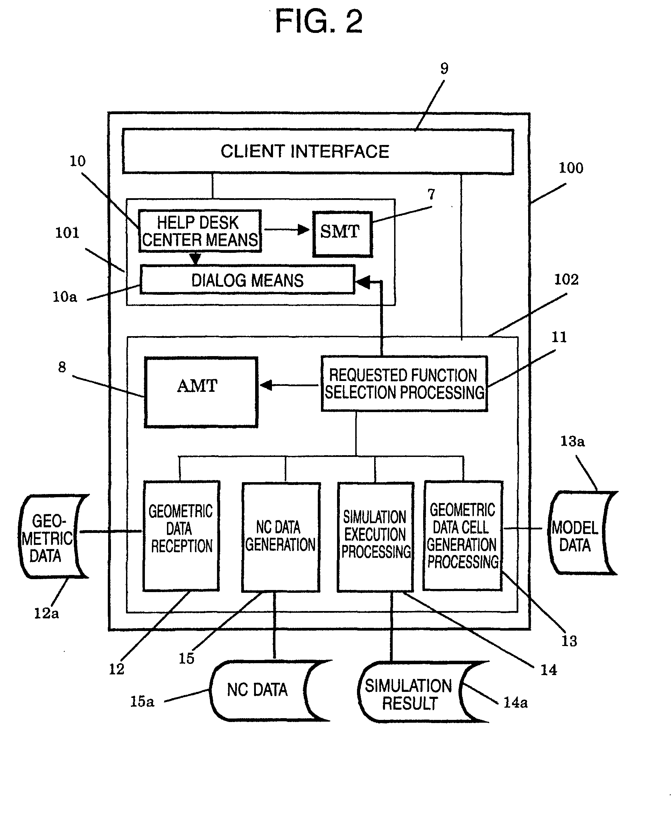

Fig. 1 shows directly the concept of the collaborative work type application service system, and Fig. 2 shows the configuration of cooperative type ASP work environment means 100, representative in terms of hardware and software, for a concrete embodiment related to a collaborative work type application service system.

Based on the above-mentioned group of components, a user 1 and a support staff member 2 work together on cooperative type ASP work environment means 100, i.e. cooperatively advance the work for the purpose of resolving a "Digital manufacturing" problem.

User 1 accesses the cooperative type ASP work environment means 100, a component of the present invention, by using a client terminal 4 connected to the Internet 3. In concrete terms, if he inputs the requested function using the WWW interface screen supplied by helpdesk center means 101, helpdesk center means 101 selects a support staff member appropriate to the request from the user, and displays a list of selected candidates to client terminal 1. In the displayed support staff member candidate list, the support staff names are of course listed, as well as specialty fields, experience, and track records. The user selects the support staff member candidate that he prefers from the list. Naturally, he can designate several support staff members. Next, contact is made with the support staff member selected by the user. Contact with the support staff member is handled by driving transmission of electronic mail, telephone calls or mobile telephone calls. The contacted support staff member, using a support staff terminal 6, accesses dialog means provided in helpdesk center means 101. As result of this, a dialog environment gets established between user 1 and support staff member 2. The dialog means is based on exchanges using the World Wide Web, but electronic mail in combination with telephony or video telephony may also be used.

Subsequently, user 1 and support staff member 2 use jointly collaborative work environment means 102 and, while exchanging opinions, select a simulation tool appropriate to the simulation function requested by user 1, e.g. a casting process simulation, a metal mold simulation, or a micromachining simulation. When the simulation tool to be used is decided upon, user 1 transfers geometric data from client terminal 4 to collaborative work environment means 102 of cooperative type ASP work environment means 100.

In collaborative work environment means 102, the received geometric data are stored in temporary files, and internal cells and boundary cells are created with the method given in Japanese patent applications No. 2001-25023 and No. 2001-210508 and, after the data have been stored as modeling files, the contents of the concerned files are transferred to servers 5a to 5n (any one from AP1 to APn) in which the previously selected simulation tool is installed, and execution of the simulation is requested. When the simulation execution result coming from AP1 to APn is sent to collaborative work environment means 102 over the Internet 3, user 1 and support staff member 2 discuss whether the simulation result is the desired one and, if necessary, modify the parameters and reiterate a request for execution of the simulation.

If the desired result has been obtained, NC machining data are generated if necessary, and the NC machining data are sent to client terminal 4 of user 1.

Subsequently, using the embodiment of Fig. 2 and the following figures, an explanation of a representative overall picture of the collaborative work type application service system will be given. Each processing means of Fig. 2, being a group of processing programs operating under a UNIX or other Operating System (OS), can be handled by handled by individual hardware devices and OS for each program, but the group of these processing programs may also coexist under one OS.

A client interface processing portion 9 in Fig. 2 provides a WWW interface in the cooperative type ASP work environment means server 100 handling client terminal 4 and support staff terminal 6 in Fig. 1. In addition, dialog means 10a is a memory area for information on the exchanges between user 1 and support staff member 2. There may also be a plurality of support staff members 2.

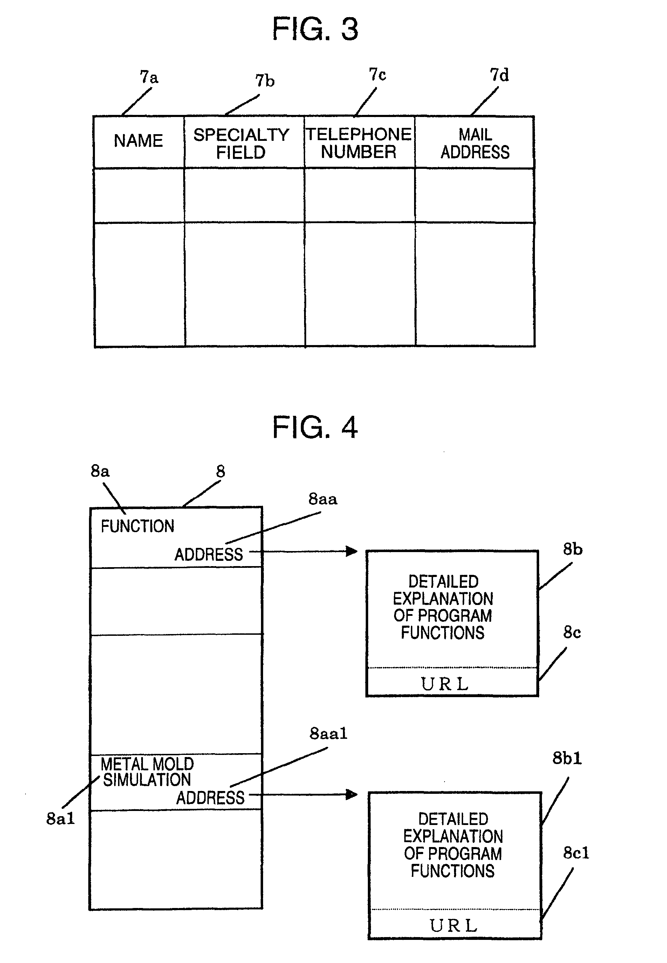

Fig. 3 is a diagram showing the format of support staff management table 7 (Support Management Table: SMT), this SMT 7 being loaded into the main memory of cooperative type ASP work environment means server 100. In SMT 7, support staff names 7a, specialty fields 7b, telephone numbers 7c, and mail addresses 7d are stored. In the field 7b for specialty fields, numbers of years of experience, track records, and so forth are stored. Fig. 4 is a diagram showing the format of the request processing function management table 8 (Application Management Table: AMT) shown in Fig. 2, a processing function field 8a and a detailed information address 8aa, function explanatory information field 8b, as well as URL (Uniform Resource Locator) addresses 8c of execution APn being stored therein. This AMT 8 is also loaded into the main memory of cooperative type ASP work environment means server 100. Further, the Internet address format of the URLs is specified in the Internet protocol RFC (Request For Comment).

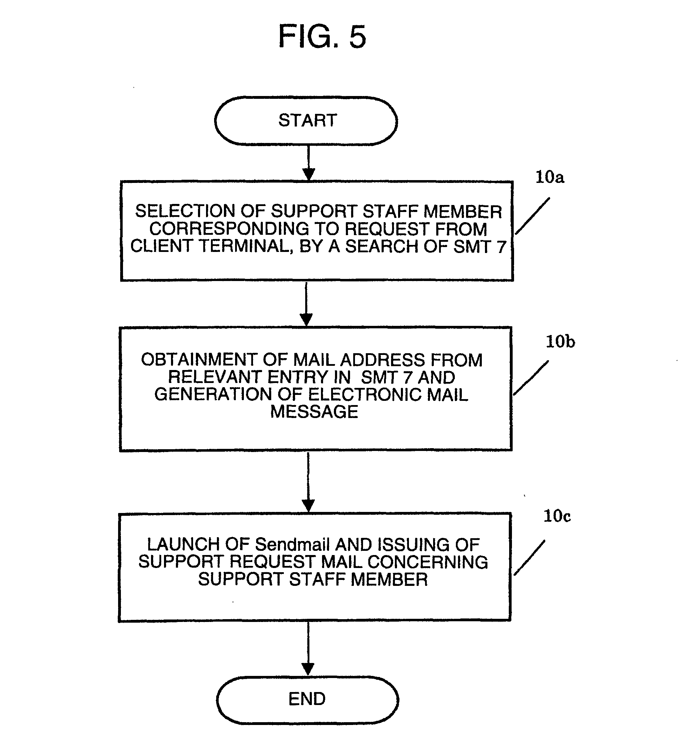

Fig. 5 is a diagram showing the process flow of helpdesk center processing means 10 and, using Fig. 5, Fig. 2, and Fig. 3, the processing of helpdesk center processing means 10 will be explained.

Referring to Fig. 5, when helpdesk center means 10 gets passed the control from client interface 9, processing of the series of processing steps from step 10a to 10c is executed. In processing step 10a, SMT 7 is searched and a support staff member corresponding to the work requested from client terminal 4 is selected. This search is performed by carrying out a comparison check of specialty field data fields 7b corresponding to the work request stored in dialog means 10a. Consequently, there may also be cases when several support staff candidates are detected. As a result of the comparison selection processing, if corresponding support staff members are found, the list of the support staff candidates is displayed to client terminal 4. User 1 selects a preferred person from the candidate list displayed to client terminal 4. At this time, he may also select several support staff members. Subsequently, the mail address of the support staff member corresponding to the support staff member designated by user 1 in processing step 10b is obtained from mail address field 7d, and Internet mail message and mail address formats are generated in accordance with RFC 821.

Subsequently, through processing step 10c, the mail body is sent to the SendMail function implemented in server 100 in order to send the electronic mail message to Internet mail. E.g., in the UNIX (OS developed by Bell Labs of AT&T Inc. and a trademark of The Open Group) SendMail function processing process, this mail body is sent over the Internet to the mail server of the domain specified in the mail address of support staff member 2, and the support request from the user is notified to terminal 6 of support staff member 2. If several support staff members have been selected, the several support staff members are notified. Here, an example of sending an electronic mail message to Internet mail has been shown, but the system is not limited to a contact method by electronic mail. If telephone number 7c of SMT 7 is utilized, contact by phone is also possible.

An environment becomes complete in which support staff member 2 contacted about the support request performs joint work, using support staff terminal 6, together with user 1 through dialog means 10a of Fig. 2, a telephone or a video telephone. After this, user 1 and support staff member 2 work together, i.e. cooperate, to advance the appropriate work for the work desired by the user.

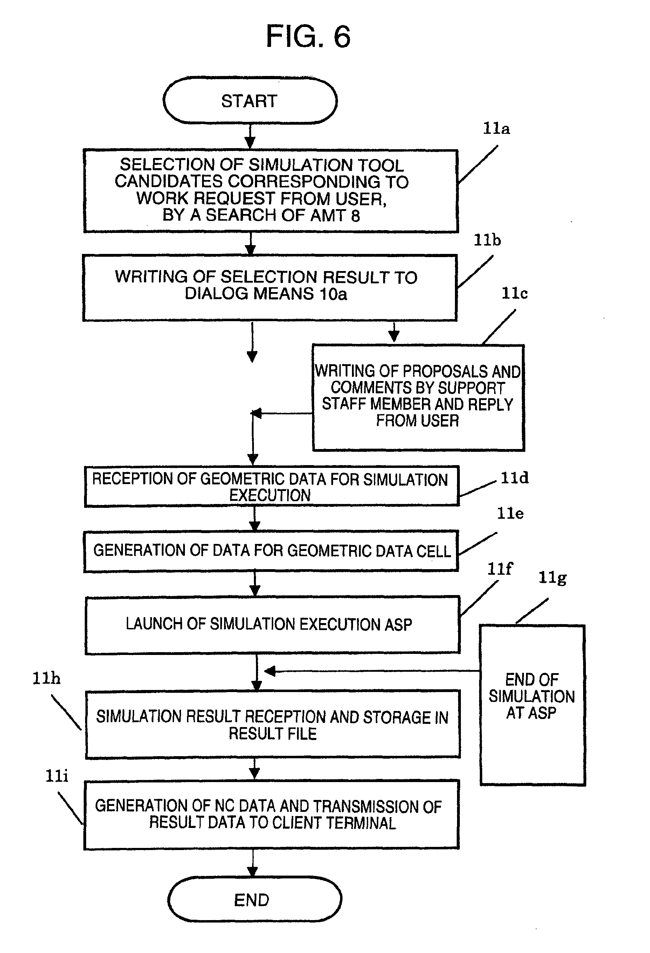

Fig. 6 is a process flow of the requested function selection execution processing portion 11 within the collaborative work environment means 102 shown in Fig. 2. Further, in Fig. 6, for ease of explanation, a process flow is described for the case of a single support staff member 2; in the case of a plurality of support staff members, the exchange processing with the support staff members ends up being repeated several times.

Referring to Fig. 6, Fig. 2, and Fig. 4, in processing step 11a of Fig. 6, AMT 8 is searched and a simulation tool corresponding to work request from user 1 is selected. E.g., if the request from the user is metal mold making work, function field 8a of AMT 8 in Fig. 4 is searched. As a result of this, the "metal mold simulation" entry 8a1 stored in function field 8a is in agreement. This search processing searches all entries. As a consequence, there are some cases in which several entries are selected, in which case those several entries all become candidates.

In processing step 11b, program function explanatory information field 8b, to which address 8aa1 stored in the selected entry is pointing, is stored in dialog means 103. As a result of this, user 1 and support staff member 2 can jointly refer to the simulation tool.

In processing step 11c, support staff member 2 refers to and examines the explanatory information, stored in dialog means 103, on the functions of the simulation tool, and gives proposals and comments to user 1. These proposals and comments can be directly written into a domain of dialog means 103, but is also possible to carry out an exchange by telephone or video telephone. In the example of processing step 11c, an embodiment is shown in which support staff member 2 and user 1 write to dialog means 103.

If an execution reply from user 1 is written, processing steps 11d and onwards are subsequently executed.

In processing step 11d, a geometric data receiving portion 12 in Fig. 2 is driven, geometric data from client terminal 4 of user 1 are received and are stored in a geometric data field 12a.

In the subsequent processing step 11e, a geometric data cell generation processing portion 13 is driven, a geometric data cell and a physical volume cell are generated from geometric data and are stored in a modeling data file 13a. The data in the geometric data cell and the physical volume data stored in this modeling data file 13a serve as standard data for each simulation tool.

In the processing step 11f of Fig. 6, through a transfer of the data stored in modeling data file 13a to the server (any server from among AP1 to APn) in which the simulation tool selected and decided upon in processing step 11c is installed, the simulation processing is executed in the concerned server.

When the simulation at ASPn terminates (processing step 11g), the result data transmitted from the server of ASPn are stored in a simulation result file 14a and are visually displayed, if necessary, to client terminal 4 and support staff terminal 6 (not illustrated) in processing step 11h. User 1 and support staff member 2 examine the simulation result. This is to say that there comes about an examination of the simulation result in a telediscussion.

In case parameters are modified and the tool is re-executed as a result of the examination, the above-mentioned processing steps from step 11d to 11h may be reiterated until the user is satisfied with the result.

When the simulation result has become satisfactory, an NC data generation processing portion 15 is driven, NC data are generated and are stored in an NC data file 15a in processing step 11i. After that, NC data are transferred to client terminal 4.

In the embodiment mentioned above, an example of a configuration is given in which each server is connected to the Internet, but, naturally, the system includes a configuration in which each server is connected to a Local Area Network (LAN) on the same campus.

In addition, the embodiment mentioned above is an embodiment applied to the "Digital manufacturing" work processes of the collaborative work type application service system of the present invention, but it can also be applied to applications in which the user and the support staff member execute work processes jointly, i.e. through cooperation.

### INDUSTRIAL APPLICABILITY

As mentioned above, according to the present invention, since the user, designers, experts, and skillful and experienced persons in cooperation perform operations consistently, from the preparation of the simulation work to the execution of the simulation and the generation of NC data, it is possible to evolve towards an effective use of experts and skillful and experienced persons serving as support staff, an improvement in work efficiency of users and the like, and a novel service architecture of the Internet use form. Also, since the cooperative type application service system of the present invention selects a server of the type of Internet-connected application servers in which many different kinds of simulation tools are installed, and executes the desired simulation, the result is that it is possible to jointly use many different kinds of simulation tools, so a reduction in expenses is projected.

## Claims

1. A collaborative work type application service system having a configuration, in which helpdesk center means (101), by means of which a user (1) and a support staff member (2) exchange messages, in a prototype making process, collaborative work environment means (102), executing, in response to a request from the user in cooperation with the support staff member, a selection of an application server (5a to 5n) executing an appropriate simulation, a terminal (4) of the concerned user, a terminal (6) of the support staff member, the concerned service system, and application servers (5a to 5n) are connected in a network, the system consisting of
a processing step in which a support staff member appropriate to the work request from the user is selected and contact is made with the concerned support staff member,
a processing step in which the contacted support staff member and the user, by an exchange of messages, work together to select a simulation tool optimal for the work request,
a processing step in which an execution of the selected simulation tool is requested to the server in which the simulation tool is installed,
a processing step in which the execution result of the simulation processing is received and a check of the result is performed, and
a processing step in which, if an appropriate result was obtained as a result of the check, the result data are sent to the terminal of the user.

2. The collaborative work type application service system according to Claim 1, wherein said network connection consists of being connected to the Internet.

3. The collaborative work type application service system according to Claim 1 wherein, for the contact, in said helpdesk center means, with the support staff member, electronic mail, telephony, or video telephony constitutes a valid medium.

4. The collaborative work type application service system according to Claim 1, **characterized in that** the user, in said helpdesk center means, files his request for prototyping work from the World Wide Web.

5. The collaborative work type application service system according to Claim 1, having a processing step in which, when a support staff member appropriate to the work request from the user of Claim 1 is selected, a list of support staff members able to respond to the work request is made known to the user, and the user can select from the list of support staff members able to respond.

6. The collaborative work type application service system according to Claim 5, having a processing step in which, when the user of Claim 5 makes a selection from the list of support staff members able to respond, a plurality of support staff members can be designated.

7. The collaborative work type application service system according to Claim 1, **characterized in that** said collaborative work environment means is provided with a common domain for discussion between the user and the support staff member.

8. The collaborative work type application service system according to Claim 1, having a processing step in which, when the support staff member, and the user, of Claim 1 work together through an exchange of messages to select an optimal simulation tool for the work request, the selection is made on the basis of the proposals and comments of the support staff member.

9. The collaborative work type application service system according to Claim 1, **characterized in that** said collaborative work environment means handles the exchange of messages between the user and the support staff member through telephony, video telephony, or the World Wide Web.

10. The collaborative work type application service system according to Claim 1, **characterized in that** said collaborative work environment means selects a server, connected to the Internet, in which the simulation tool corresponding to the processing request is installed.

11. The collaborative work type application service system according to Claim 1, **characterized in that** said collaborative work environment means selects the server in which the simulation tool corresponding to the processing request is installed from among the concerned collaborative work environment means and the group of servers connected to a Local Area Network

12. The collaborative work type application service system according to Claim 1, **characterized in that**, when the user, and the support staff member, of Claim 1 work together to select an optimal simulation tool, the selection from among the candidate simulation tools reflects the opinions and comments of the support staff member.

13. A collaborative work type application service program, being a helpdesk center processing program, whereby a user and a support staff member exchange messages, and a collaborative work environment processing program, executing a selection, in response to a request from the user in cooperation with the support staff member, of an application server executing an appropriate simulation,
having a processing step in which a support staff member appropriate to the work request from the user is selected and contact is made with the concerned support staff member,
a processing step in which the contacted support staff member and the user, by an exchange of messages, work together to select a simulation tool optimal for the work request,
a processing step in which an execution of the selected simulation tool is requested to the server in which the simulation tool is installed,
a processing step in which the execution result of the simulation processing is received and a check of the result is performed, and
a processing step in which, if an appropriate result was obtained as a result of the check, the result data are sent to the terminal of the user.

14. A record medium in which a helpdesk center processing program, whereby a user and a support staff member exchange messages, and a collaborative work environment processing program, executing a selection, in response to the request from the user in cooperation with the support staff member, of an application server executing an appropriate simulation, are loaded, said programs having
a processing step in which a support staff member appropriate to the work request from the user is selected and contact is made with the concerned support staff member,
a processing step in which the contacted support staff member and the user, by an exchange of messages, work together to select a simulation tool optimal for the work request,
a processing step in which an execution of the selected simulation tool is requested to the server in which the simulation tool is installed,
a processing step in which the execution result of the simulation processing is received and a check of the result is performed, and
a processing step in which, if an appropriate result was obtained as a result of the check, the result data are sent to the terminal of the user.
